Europäisches Patentamt

European Patent Office

Office européen des brevets

(19)

(11) Veröffentlichungsnummer: **0 245 656**
**B1**

(12) **EUROPÄISCHE PATENTSCHRIFT**

(45) Veröffentlichungstag der Patentschrift:
04.07.90

(51) Int. Cl.⁵: **F16C 29/04**, F16C 33/61

(21) Anmeldenummer: 87105253.6

(22) Anmeldetag: 09.04.87

(54) **Linearführung.**

(30) Priorität: 29.04.86 DE 8611710 U

(43) Veröffentlichungstag der Anmeldung:
**19.11.87 Patentblatt 87/47**

(45) Bekanntmachung des Hinweises auf die Patenterteilung:
**04.07.90 Patentblatt 90/27**

(84) Benannte Vertragsstaaten:
**CH DE FR GB IT LI**

(56) Entgegenhaltungen:
**DE-A- 2 729 354**
**DE-A- 3 040 711**
**DE-C- 864 486**
**DE-C- 927 780**
**DE-C- 3 432 536**
**US-A- 4 515 413**

(73) Patentinhaber: **isert-electronic Hugo Isert,
Bahnhofstrasse 33, D-6419 Eiterfeld 1(DE)**

(72) Erfinder: **Isert, Hugo, Bahnhofstrasse 33,
D-6419 Eiterfeld(DE)**

(74) Vertreter: **Olbricht, Karl Heinrich, Dipl.-Phys., Am
Weinberg 15, D-3556 Niederweimar(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Linearführung gemäß dem Oberbegriff von Anspruch 1.

Für die verschiedensten Anwendungen z.B. in der feinmechanischen und elektronischen Industrie benötigt man Führungsmittel, die eine exakte Translationsbewegung ermöglichen. Dazu wird in der FR-A 1 124 901 eine Schiene vorgeschlagen, deren Kopf beiderseits Wellenpaare trägt, denen gleichartige Wellenpaare eines übergreifenden Schlittens gegenüberstehen. Eine Vielzahl von Kugeln zwischen den benachbarten Wellenpaaren erlaubt einen leichten Lauf des Schlittens. Der Aufwand ist jedoch groß, zumal die Kugeln in kontinuierlicher Folge entlang der gesamten Schiene gehalten bzw. gefesselt sein müssen. Eine Vereinfachung brachte die Vorrichtung nach der GB-A 1 081 669, wobei der Schlitten mit Linearkugellagern versehen ist, die auf je einer Welle beiderseits des Schienenkörpers laufen. Die Kugellager umgreifen die Wellen auf dem halben Umfang und drücken sie an den seitlich genuteten Schienenkörper. Diese Anordnung erfordert daher beträchtliche Toleranzen; durch leicht mögliche Fehljustierung kann der einwandfreie Lauf gestört werden.

Das in der DE-A 3 040 711 beschriebene Führungssystem bedient sich zweier Wellen, die auf einer Anzahl Böcken beiderseits gehaltert sind. Darauf ist ein Schlitten über Rollenpaare abgestützt, die in stumpfem Winkel zueinander auf den Wellen laufen. Für die Genauigkeit der Führung kommt es auf die exakte Montage der Rollenhalterungen in dem Schlitten an. Außerdem ist die Befestigung der Schienen relativ aufwendig, da die Böcke einzeln "aufgefädelt" und dann in vorgegebenem Abstand auf einem Träger verschraubt werden müssen. Nicht anders ist es bei Verwendung von Klemmprofilen, welche die Welle über die ganze Länge haltern, wobei genaue Passung eine unbedingte Voraussetzung ist. Eine Verbesserung wurde gemäß der EP-A 0 080 515 durch eine Laufschienenhalterung mittels einer Druckplatte erzielt, welche die Wellen am Außenrand oben übergreift und gegebenenfalls nach innen preßt. Dabei ist aber kritisch, in welchem Maße die Befestigungsschrauben angezogen werden, welche die einzelnen Böcke durchsetzen, da eine Verformung der Wellen eintreten kann.

Es besteht mithin ein Bedürfnis an vereinfachten und verbesserten Führungssystemen. Ein wichtiges Ziel der Erfindung ist die Schaffung einer Linearführung der eingangs genannten Art, die ohne Verzicht auf Genauigkeit ebenso schnell wie zuverlässig hergestellt und montiert werden kann. Die benötigten Befestigungsmittel sollen einfach aufgebaut und problemlos anzuwenden sein.

Hauptmerkmale der Erfindung sind im kennzeichnenden Teil von Anspruch 1 angegeben. Ausgestaltungen sind Gegenstand der Unteransprüche 2 bis 14.

Nach der Erfindung dienen Paßstücke dazu, die Wellen in dem als einstückiges Klemmprofil ausgebildeten Schienenkörper festzulegen. Das hat den großen Vorzug, daß die Befestigungselemente für den Schienenkörper keinen Einfluß auf die Klemmkraft haben, mit der die Wellen in ihrer Lage gehalten werden. Durch die erfindungsgemäßen Paßstücke werden die Herstellungskosten entscheidend herabgesetzt; außerdem wird die Montage stark beschleunigt. Überdies kann die neue Linearführung sehr kompakt gestaltet sein.

Laut Anspruch 2 hat der Schienenkörper beiderseits Längsausnehmungen mit oberen und unteren Rippen, welche das seitliche Heraustreten der Wellen begrenzen. Wichtig ist nun, daß diese Längsausnehmungen keine genaue Passung für die Wellen zu haben brauche, weil diese durch die Paßstücke fixiert werden. Das führt zu einer überaus raschen und zuverlässigen Montage. Besonders günstig ist es dabei, die Wellen gemäß Anspruch 3 mittels der Paßstücke von innen her an die Rippen zu klemmen. Nach Anspruch 4 sind die oberen Rippen elastisch oder nachstellbar, wodurch die Wellen sozusagen von oben linear gefesselt werden können.

Gemäß Anspruch 5 sind Fertigung und Montage außerordentlich erleichtert, da einheitliche Paßstücke in mittig angeordneten Ausnehmungen bequem und genau anbringbar sind. Die quer zu den Wellen gerichtete Klemmkraftkomponente läßt sich mit den Maßnahmen laut Anspruch 6 überaus gleichmäßig aufbringen, so daß eine Linearführung von bislang nicht erzielbarer Präzision geschaffen wird.

Hierfür besonders gut geeignet und fertigungsmäßig sehr vorteilhaft ist die Ausgestaltung nach Anspruch 7, da nur zylindrische Paßstücke in mühelos erzeugbaren Bohrungen im Inneren des Schienenkörpers zu befestigen sind. Dabei kann der Kopf der zur Festlegung der Paßstücke benutzten Schrauben laut Anspruch 8 mit der Deckfläche des Schienenkörpers bündig oder versenkt abschließen. Von außen ist dann nur eine im wesentlichen einheitliche Flächenstruktur zu sehen, die jedenfalls keine störenden Erhöhungen aufweist.

Bedeutsam ist die Weiterbildung gemäß Anspruch 9, wonach die größte Breitenabmessung bzw. der größte Durchmesser der Paßstücke den Minimalabstand der Wellen automatisch festlegt und dauerhaft gewährleistet. Weitere Justiermittel und -arbeiten sind mithin nicht erforderlich, und auch jegliches Nachjustieren entfällt. Das Auseinandernehmen und Wiederzusammensetzen ist jederzeit möglich; Demontage und erneute Montage bieten also keine Probleme.

Wichtig ist ferner die Gestaltung nach Anspruch 10 mit einer Linien-Anlage der Rippen und zumindest einer Punktabstützung der Paßstücke an den Wellen, so daß – im Querschnitt gesehen – eine Drei-Punkt-Klemmung vorzugsweise unter je 120° gegeben ist, was besonders große Stabilität sichert.

Eine andere Weiterbildung der Erfindung ergibt sich aus den Ansprüchen 11 bis 14. Indem der Schienenkörper an seiner Oberseite einen Längsschlitz von bestimmter Mindesttiefe aufweist, lassen sich die oberen Rippen durch die Paßstücke auseinanderspreizen, so daß die Wellen durchgehend an die Halterippen und gegebenenfalls zusätzlich an die innere Wölbung der Längsausnehmungen gepreßt werden. Dadurch wird die Sicherheit und Schnelligkeit der Klemmbefestigung noch erhöht.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1 eine Stirnansicht eines Schienenkörpers,

Fig. 2 eine Stirnansicht einer Linearführung vor der Montage,

Fig. 3 eine Querschnittsansicht der Linearführung von Fig. 2 nach der Montage, wobei Befestigungsschrauben weggelassen sind,

Fig. 4 eine Schrägansicht einer Linearführung mit aufgesetztem Schlitten,

Fig. 5 eine Schrägansicht eines Linearkugellagers und

Fig. 6 eine schematisierte Seitenansicht der Anlage des Linearkugellagers von Fig. 5 an einer Welle.

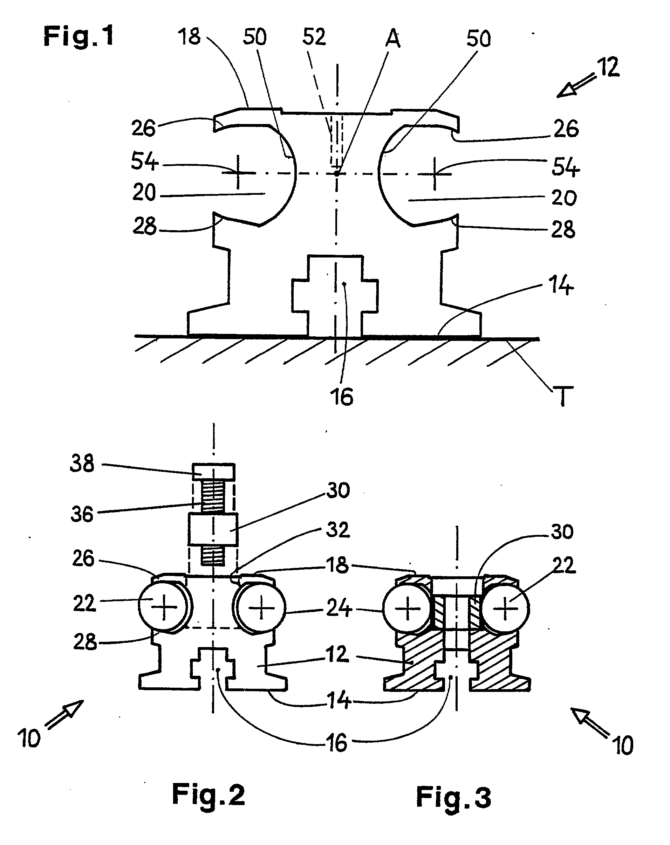

Der prinzipielle Aufbau einer insgesamt mit 10 bezeichneten Linearführung ist aus den Fig. 1 bis 4 ersichtlich. Sie hat einen Schienenkörper 12 (Fig. 1), beispielsweise aus einem gezogenen Aluminiumprofil. Der ebene Boden 14 des Schienenkörpers 12 ist zur Befestigung an einem nur schematisch angedeuteten Träger T vorgesehen, beispielsweise einer Platte. Die Festlegung kann mittels Schrauben 36 (Fig. 2) und (nicht gezeichneter) Muttern erfolgen, namentlich mittels von den Schrauben durchsetzten Gleitmuttern in einem T-Nuten-Einzug 16 an der Unterseite des Schienenkörpers 12. Dessen Oberseite ist als im wesentlichen ebene Deckfläche 18 gestaltet, deren Mitte geringfügig eingesenkt sein kann.

Zu beiden Seiten hat der Schienenkörper 12 Ausnehmungen 20 zur Aufnahme von Wellen 22. Diese ragen mit ihren Außenflächen 24 seitlich über den Schienkörper 12 hinaus, sind in ihm aber durch obere Rippen 26 und untere Rippen 28 gehalten. Diese bilden die äußeren Begrenzungen der Ausnehmungen 20 mit einer lichten Weite, die geringer ist als der Durchmesser der Wellen 22. Letztere sind dadurch sicher gehalten. Sie haben zunächst innerhalb der Längsausnehmungen 20 ein vorgegebenes geringes Bewegungsspiel. Die oberen Rippen 26 können elastisch bzw. quer zu den Wellen 22 nachstellbar sein, wogegen die unteren Rippen 28 starr sind.

Quer zur Längsachse A des Schienenkörpers 12 und vorzugsweise senkrecht zu dessen Deckfläche 18 sind in den Schienenkörper Bohrungen 32 in gleichmäßigen Abständen eingebracht. Für Wellen 22 von 12 mm Durchmesser sind beispielsweise Abstände von je 50 mm zweckmäßig. In die Bohrungen 32 sind Paßstücke 30 in Form von Rollen einpaßbar, die ein vorgegebenes Übermaß haben und insbesondere gehärtet sowie geschliffen sind. Der Durchmesser der Paßstücke 30 bestimmt den Abstand der Wellen 22 voneinander, welche durch die Rollen von innen her an die Halterippen 26, 28 gedrückt werden und so in ihrer Lage präzise fixiert sind. Im Querschnitt ergibt sich eine Drei-Punkt-Klemmung der Wellen 22, bevorzugt in Winkelabständen von etwa 120°.

Man erkennt, daß die Paßstücke 30 nicht unbedingt zylindrisch sein müssen, sondern auch andere Gestalt haben können, beispielsweise die Form schwach konischer Klötze. Ihre Festlegung erfolgt mittels Befestigungsschrauben 36 (Fig. 2), welche die Paßstücke 30 durchsetzen und mit Muttern in dem Nuten-Einzug 16 des Schienenkörpers 12 anbringbar oder direkt mit dem Träger T verschraubbar sind. Der Kopf 38 der Befestigungsschrauben 36 schließt vorzugsweise mit der Deckfläche 18 des Schienenkörpers 12 bündig oder versenkt ab.

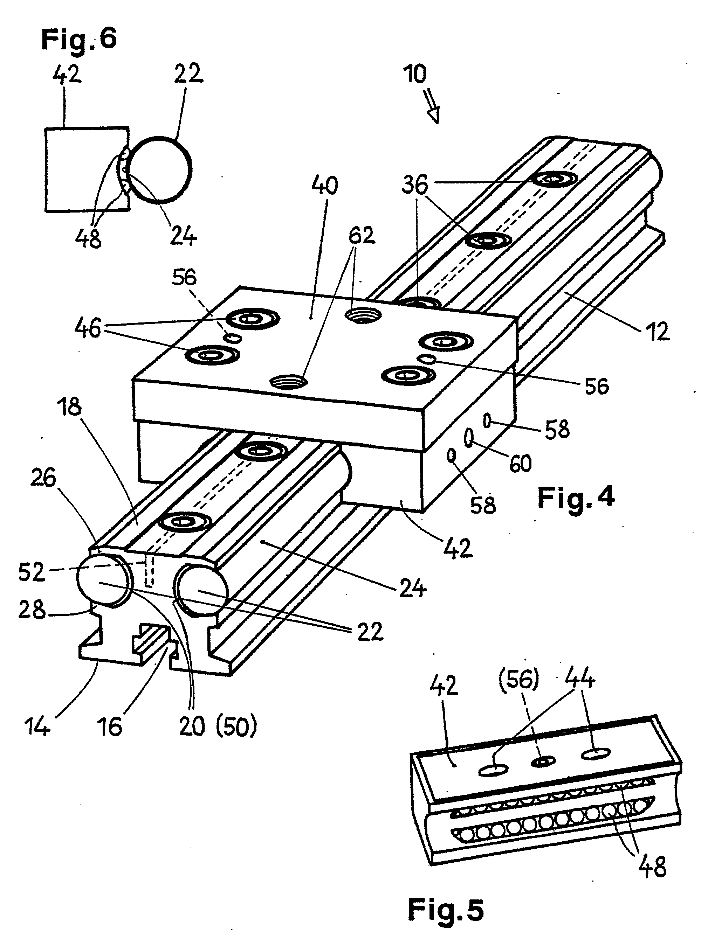

Ein Anwendungsbeispiel ist aus Fig. 4 zu ersehen. Die Linearführung 10 trägt einen Schlitten 40, der an seiner Unterseite beiderseits mit Linearkugellagern 42 versehen ist. Diese haben Schraublöcher 44 und sind mit Halteschrauben 46 am Schlitten 40 befestigt. Jedes Linearkugellager 42 hat eine Kugel-Doppelspur 48 (Fig. 5). An der Oberseite des Schlittens 40 sind Gewindelöcher 62 vorgesehen, um irgendwelche (nicht dargestellten) Vorrichtungen anbringen zu können, die mit dem Schlitten verfahrbar sein sollen. Ist der Schlitten 40 auf die Linearführung 10 aufgeschoben, so liegt diese Kugel-Doppelspur 48 eines jeden Linearkugellagers 42 an der Außenfläche 24 der betreffenden Welle 22 gleitbeweglich an (Fig. 6).

Parallel zu den Schraublöchern 44 und zu den Halteschraugen 46 hat der Schlitten 40 je eine Verstiftung 56 zwecks paßgenauer Fixierung der Mitte der Linearkugellager 42. Diese weisen ihrerseits außen zwei Bohrungen 58 zum exakten Vermessen mittels Meß- und Druckstiften (nicht dargestellt) sowie eine Bohrung 60 zum Einstellen und als Schmiernippel auf. Infolge der genauen Parallelität der beiden Kugelumläufe 48 der Lager 42 und dank deren Justierbarkeit kann eine außerordentliche Leichtgängigkeit des Schlittens 40 an den Wellen 22 erreicht werden. Weil die Linearführung 10 sich durch eine bisher unerreichbare Präzision auszeichnet, kann der Schlitten 40 mit denkbar geringem Reibungswiderstand präzise hin und her gefahren werden.

Eine Weiterblindung der Erfindung ist in Fig. 1 und 4 schematisch angedeutet. Danach kann in die Oberseite des Schienenkörpers 12 ein Längsschlitz 52 eingearbeitet sein, dessen Tiefe etwa bis zur Ebene der Wellenachsen 54 reicht. Die Paßstücke 30 können nun so ausgebildet sein, daß sie die zusammenhängenden Hälften des Schienenkörper-Oberteils spreizen. Dadurch pressen sich die oberen Rippen 26 auf die Wellen 22 und drücken diese damit nach unten und gegebenenfalls nach innen. Durch die Bemessung des Längsschlitzes 52 und der Paßstücke 30 hat man es in der Hand, die Wellen 22 auch oder zusätzlich auf diese Weise im Schienenkörper 12 zu fixieren.

Man erkennt, daß erfindungsgemäß eine Linearführung 10 geschaffen ist, in deren Schienenkörper 12 die Wellen 22 mittels Paßstücken 30 auf einfachste Weise kraft- und formschlüssig lagefixiert sind. In den Rahmen der Erfindung fallen daher auch Abwandlungen gegenüber den gezeichneten Ausführungsbeispielen. So können die Paßstücke 30 länglich, längsverbunden oder sogar insgesamt einstückig sein, womit die durchgehende Anlage der Wellen 22 an den Halterippen 26, 28 noch besser gewährleistet werden kann.

## Patentansprüche

1. Linearführung (10) mit einem Schienenkörper (12), der beiderseits seiner Längsachse (A) je eine Welle (22) haltert, auf deren freier Außenfläche (24) wenigstens ein zu führendes Teil (Schlitten 40) mittels Linearkugellagern (42), Rollen o.dgl. gleitbeweglich abstützbar ist, dadurch **gekennzeichnet,** daß der Schienenkörper (12) als einstückiges Klemmprofil gestaltet ist, das Ausnehmungen (32) zur Aufnahme von Paßstücken (30) aufweist, welche die Wellen (22) fixieren.

2. Linearführung nach Anspruch 1, dadurch **gekennzeichnet,** daß der Schienenkörper (12) zur Aufnahme der Wellen (22) je eine seitliche Längsausnehmung (20) hat, die von oberen und unteren Rippen (26, 28) begrenzt ist, deren lichter Abstand voneinander kleiner als der Wellendurchmesser ist.

3. Linearführung nach Anspruch 2, dadurch **gekennzeichnet,** daß die Wellen (22) mittels der Paßstücke (30) von innen her an die Rippen (26, 28) klemmbar sind.

4. Linearführung nach Anspruch 2 oder 3, dadurch **gekennzeichnet,** daß die unteren Rippen (28) starr, die oberen Rippen (26) hingegen in Richtung auf die benachbarte Welle (22) zu elastisch oder nachstellbar ausgebildet sind.

5. Linearführung nach einem der Ansprüche 1 bis 4, dadurch **gekennzeichnet,** daß die Paßstücke (30) von einheitlicher Gestalt und die Ausnehmungen (32) mittig an der Oberseite des Schienenkörpers (12) angeordnet sind.

6. Linearführung nach Anspruch 5, dadurch **gekennzeichnet,** daß Größe und Abstände der Ausnehmungen (32) voneinander in Abstimmung auf den Wellendurchmesser so bemessen sind, daß die von den Paßstücken (30) abgestützten Wellen (22) auch im Mikrobereich gleichmäßig linear sind.

7. Linearführung wenigstens nach Anspruch 5 und 6, dadurch **gekennzeichnet,** daß die Paßstücke (30) Rollen und die Ausnehmungen (32) Bohrungen sind, die quer zur Längsachse (A) des Schienenkörpers (12) verlaufen.

8. Linearführung nach wenigstens einem der Ansprüche 1 bis 7, dadurch **gekennzeichnet,** daß jedes Paßstück (30) von zumindest einer Befestigungsschraube (36) durchsetzt ist, deren Kopf (38) mit der Deckfläche (18) des Schienenkörpers (12) fluchtet oder darin versenkt sitzt.

9. Linearführung nach wenigstens einem der Ansprüche 1 bis 8, dadurch **gekennzeichnet,** daß bezogen auf den Querschnitt des Schienenkörpers (12) die größte Breitenabmessung bzw. der größte Durchmesser der Paßstücke (30) den kleinstmöglichen Abstand der Wellen (22) voneinander festlegt.

10. Linearführung nach wenigstens einem der Ansprüche 3 bis 9, dadurch **gekennzeichnet,** daß die Wellenabstützung durch die Rippen (26, 28) und die Paßstücke (30) im Querschnitt gesehen eine Drei-Punkt- bzw. -Linien-Auflage bildet, bevorzugt in Winkeln von etwa 120°.

11. Linearführung nach wenigstens einem der Ansprüche 1 bis 10, dadurch **gekennzeichnet,** daß der Schienenkörper (12) an seiner Oberseite mittig einen Längsschlitz (52) aufweist.

12. Linearführung nach Anspruch 11, dadurch **gekennzeichnet,** daß die Tiefe des Längsschlitzes (52) bis etwa zur Ebene der Wellenachsen (54) reicht.

13. Linearführung nach Anspruch 11 oder 12, dadurch **gekennzeichnet,** daß die oberen Rippen (26) durch Einpressen der Paßstücke (30) voneinander derart spreizbar sind, daß die Wellen (22) an den oberen und unteren Rippen (26, 28) durchgehend anliegen.

14. Linearführung nach einem der Ansprüche 11 bis 13, dadurch **gekennzeichnet,** daß durch die Spreizung der oberen Rippen (26) und/oder durch das Einpressen der Paßstücke (30) die Wellen (22) zusätzlich an die innere Wölbung (50) der Längsausnehmungen (20) preßbar sind.

## Revendications

1. Glissière linéaire (10) avec un corps de rail (12) qui porte de chaque côté de son axe longitudinal (A) une tige (22) sur la face externe libre (24) de laquelle peut s'appuyer au moins une pièce à guider (coulisseau 40) au moyen de roulements à billes linéaires (42), de cylindres, etc. de façon à pouvoir coulisser, caractérisée en ce que le corps du rail (12) est conçu comme un profilé de blocage en une seule pièce qui présente des cavités (32) pour le logement de cales d'ajustage (30) qui fixent les tiges (20).

2. Glissière linéaire selon la revendication 1, caractérisée en ce que le corps du rail (12) présente de chaque côté une cavité longitudinale latérale (20) pour le logement des tiges (22), limitée par des rebords inférieur et supérieur (26 et 28) dont l'ouverture est inférieure au diamètre des tiges.

3. Glissière longitudinale selon la revendication 2, caractérisée en ce que les tiges (22) peuvent être maintenues de l'intérieur au moyen des cales d'ajustage (30) contre les rebords (26 et 28).

4. Glissière linéaire selon la revendication 2 ou 3, caractérisée en ce que les rebords inférieurs (28) sont fixes tandis que les rebords supérieurs (26), par contre, sont élastiques ou ajustables en direction de la tige adjacente (22).

5. Glissière linéaire selon une des revendications de 1 à 4, caractérisée en ce que les cales d'ajustage (30) de conception uniforme et les cavités (32) sont disposées axialement sur la face supérieure du corps du rail (12).

6. Glissière linéaire selon la revendication 5, caractérisée en ce que les dimensions des cavités (32) et les intervalles entre elles sont dimensionnées en fonction du diamètre des tiges de sorte que les tiges (22) soutenues par les cales d'ajustage (30) sont uniformément linéaires, même micrométriquement.

7. Glissière linéaire au moins selon les revendications 5 et 6, caractérisée en ce que les cales d'ajustage (30) sont des cylindres et les cavités (32) sont des alésages perpendiculaires à l'axe longitudinal (A) du corps du rail (12).

8. Glissière linéaire selon au moins une des revendications de 1 à 7, caractérisée en ce que chaque cale d'ajustage (30) est pénétrée d'au moins une vis de fixation (36) dont la tête (38) affleure ou est encastrée dans la surface de recouvrement (18) du corps du rail (12).

9. Glissière linéaire selon au moins une des revendications de 1 à 8, caractérisée en ce que dans une coupe transversale du corps du rail (12), la plus grande largeur ou le plus grand diamètre des cales d'ajustage (30) détermine l'écart minimal entre les tiges (22).

10. Glissière linéaire selon au moins une des revendications de 3 à 9, caractérisée en ce que le soutien des tiges par les rebords (26, 28) et par les cales d'ajustage (30) est constitué de trois points ou lignes disposés en triangle, de préférence à angles d'environ 120°.

11. Glissière linéaire selon au moins une des revendications de 1 à 10, caractérisée en ce que le corps du rail (12) présente axialement sur sa face supérieure une fente longitudinale (52).

12. Glissière linéaire selon la revendication 11, caractérisée en ce que la profondeur de la fente longitudinale (52) atteint environ le plan formé par les axes des tiges (54).

13. Glissière longitudinale selon les revendications 11 et 12, caractérisée en ce que les rebords supérieurs (26) peuvent s'écarter l'un de l'autre par l'enfoncement des cales d'ajustage (30) de sorte que les tiges (22) sont partout adjacentes aux rebords supérieur et inférieur (26, 28).

14. Glissière linéaire selon une des revendications de 11 à 13, caractérisée en ce que l'écartement des rebords supérieurs (26) et/ou l'enfoncement des cales d'ajustage (30) permet d'appuyer complémentairement les tiges (22) contre la courbure interne (50) des cavités longitudinales (20).

**Claims**

1. Guide unit (10) for effecting linear motion, including a rail body (12) supporting at either side of its longitudinal axis (A) one shaft (22) each, at the outside (24) of which at least one body to be guided (carriage 40) is adapted to be slidable by way of linear ball bearings (42), rollers or the like, wherein the rail body (12) is an integral clamping profile that includes hollows (32) for receiving fitting pieces (30) by which the shafts (22) are fixed.

2. Guide unit according to claim 1, wherein for receiving the shafts (22), the rail body (12) is provided on either side with one longitudinal recess (20) each defined by upper and lower ribs (26, 28) whose clearance is smaller than the shaft diameter.

3. Guide unit according to claim 2, wherein by means of the fitting pieces (30), the shafts (22) are adapted to be clamped from the inside onto the ribs (26, 28).

4. Guide unit according to claim 2 or claim 3, wherein the lower ribs (28) are rigid, whereas the upper ribs (26) are either elastic or adjsutable in a direction towards the adjacent shaft (22).

5. Guide unit according to any one of claims 1 to 4, wherein the fitting pieces (30) are of uniform shape and wherein the hollows (32) are arranged along the longitudinal center of the top side of the rail body (12).

6. Guide unit according to claim 5, wherein the size and the spacing of the hollows (32) are tuned to the shaft diameter such that the shafts (22) propped by the fitting pieces (30) are of uniform linearity even on a micromechanical scale.

7. Guide unit at least according to claim 5 and 6, wherein the fitting pieces (30) are cylindrical rollers and the hollows (32) are bores arranged transversely to the longitudinal axis (A) of the rail body (12).

8. Guide unit according to any one of claims 1 to 7, wherein through each fitting piece (30), at least one fixing bolt (36) extends a head (38) of which is either flush or countersunk relative to the top face (18) of the rail body (12).

9. Guide unit according to any one of claims 1 to 8, wherein with respect to the cross sectional area of the rail body (12), the minimum distance between the shafts (22) is determined by either the maximum width or the maximum diameter of the fitting pieces (30).

10. Guide unit according to any one of claims 3 to 9, wherein as seen in a cross sectional view, the propping of the shafts by the ribs (26, 28) and by the fitting pieces (30) forms a three-point or three-line bearing, preferably at angles of about 120 degrees each.

11. Guide unit according to any one of claims 1 to 10, wherein the rail body (12) has at its top (18) a longitudinal slot (52).

12. Guide unit according to claim 11, wherein the depth of the longitudinal slot (52) extends substantially to the plane of the shaft axes (54).

13. Guide unit according to claim 11 or claim 12, wherein the upper ribs (26) are adapted to bend down, by the fitting pieces (30) forced in, such that the shafts (22) are continuously engaged by the upper and lower ribs (26, 28).

14. Guide unit according to any one of claims 11 to 13, wherein by bending the upper ribs (26) and/or by the fitting pieces (30) forced in, the shafts (22) are additionally adapted to be pressed for positively engaging the caved interior (50) of the longitudinal recesses (20).

Fig.1

Fig.2    Fig.3

EP 0 245 656 B1

**Fig.6**

42  22

48  24

10

**Fig.4**

40

36

62

12

56

46

56

58

18

60

26

58

52

42

28

24

14  16  20 (50)  22

42  (56)  44

48

**Fig.5**